(19) Europäisches Patentamt
European Patent Office
Office européen des brevets

(11) **EP 1 300 569 B1**

(12) **FASCICULE DE BREVET EUROPEEN**

(45) Date de publication et mention
de la délivrance du brevet:
**16.06.2004 Bulletin 2004/25**

(51) Int Cl.⁷: **F02D 13/02**, F02D 23/02

(21) Numéro de dépôt: **02292416.1**

(22) Date de dépôt: **02.10.2002**

(54) **Procédé et dispositif de commande d'un moteur à combustion interne**

Verfahren und Vorrichtung zur Steuerung einer Brennkraftmaschine

Method and device for controlling an internal combustion engine

(84) Etats contractants désignés:
**AT BE BG CH CY CZ DE DK EE ES FI FR GB GR IE IT LI LU MC NL PT SE SK TR**

(30) Priorité: **05.10.2001 FR 0112833**

(43) Date de publication de la demande:
**09.04.2003 Bulletin 2003/15**

(73) Titulaire: **Peugeot Citroen Automobiles SA 92200 Neuilly sur Seine (FR)**

(72) Inventeur: **Roux-Trinquet, Isabelle 91300 Massy (FR)**

(74) Mandataire: **Grynwald, Albert Cabinet Grynwald, 127, rue du Faubourg Poissonnière 75009 Paris (FR)**

(56) Documents cités:
**EP-A- 0 376 703 EP-A- 0 568 214 EP-A- 0 945 606**

## Description

La présente invention concerne un procédé et un dispositif de commande d'un moteur à combustion interne, notamment de véhicule automobile, permettant de contrôler le taux de compression du moteur.

Le taux $\tau_m$ de compression d'un moteur à combustion interne est égal au rapport du volume $V_a$ de gaz admis dans ses chambrés de combustion sur le volume $v_c$ des gaz lors de leur combustion ($\tau_m = V_a/v_c$).

Pour une chambre de combustion utilisant le cycle à quatre temps (admission, compression, détente et échappement), on définit aussi un taux $\tau_{Géo}$ de compression déterminé par la géométrie de la chambre et la course du piston coulissant dans cette chambre. Ce taux $\tau_{Géo}$ est égal au rapport entre le volume $V_{Max}$ maximal de la chambre de combustion (le piston étant au "point mort bas)" et le volume $v_{Min}$ minimal de cette chambre (le piston étant au "point mort haut").

Le taux $\tau_{Géo}$ géométrique est égal au taux $\tau_m$ lorsque l'admission des gaz dans la chambre de combustion est effectuée pendant toute la durée de la course d'admission du piston, le piston se déplaçant du point mort haut au point mort bas. Inversement, si la durée d'admission des gaz est inférieure à la durée de la course d'admission du piston, un volume $V_m$ de gaz inférieur au volume $V_{Max}$ maximal est introduit dans le chambre et le taux $\tau_m$ diminue à une valeur $V_m/V_{Min}$ inférieure à $\tau_{Géo}$.

Par ailleurs, on sait qu'un taux $\tau_m$ de compression élevé, par exemple de 10 à 12 pour un moteur à essence, améliore le rendement de la combustion des gaz tandis qu'un taux $\tau_m$ de compression faible réduit l'émission de polluants tels que les oxydes d'azote lors de la combustion. On sait aussi qu'à forte charge, c'est-à-dire lorsque le cylindre délivre un couple élevé, un taux de compression élevé peut provoquer une combustion anticipée des gaz et entraîner un cliquetis du moteur.

C'est pourquoi, le taux de compression d'un moteur est généralement réglé pour que le rendement et les émissions de polluants de ses cylindres soient acceptables quelles que soient les conditions de fonctionnement du moteur, et notamment son couple ou son régime. Mais un tel taux de compression moyen ne permet pas d'éviter le cliquetis du moteur à forte charge.

Pour minimiser ce risque, la combustion des gaz est généralement déclenchée avant la fin de la course de compression du piston, les gaz n'atteignant pas des pressions et des températures trop élevées. Une telle avance à l'allumage réduit le risque de combustion incontrôlée des gaz au détriment du rendement du moteur.

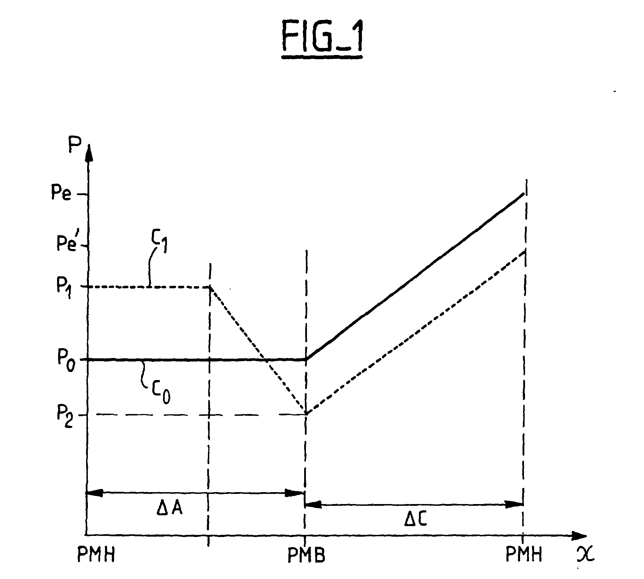

On peut aussi minimiser ce risque, dans un moteur équipé d'un turbocompresseur, en détendant les gaz introduits dans les cylindres pour abaisser leur pression et leur température. Cette détente est expliquée à l'aide de la figure 1 où la pression P des gaz dans une chambre de combustion est représentée en fonction de la course x du piston de cette chambre lors des étapes d'admission $\Delta A$, du Point Mort Haut (PMH) au Point Mort Bas (PMB), et de compression $\Delta C$, du Point Mort Bas au Point Mort Haut.

La courbe $C_0$ représente la pression des gaz introduits dans la chambre d'un moteur turbocompressé n'effectuant pas de détente. Lors de la phase $\Delta A$ d'admission, l'entrée des gaz dans la chambre s'effectue avec une pression $P_o$ fixée par le turbocompresseur et, lorsque l'admission des gaz est arrêtée, le piston comprime ces gaz admis jusqu'à une pression $P_e$ où se produit la combustion.

Pour abaisser la pression $P_e$ atteinte lors de la combustion, le turbocompresseur augmente la pression des gaz à l'admission jusqu'à une pression $P_1$ (courbe $C_1$). La durée de l'admission des gaz est diminuée pour effectuer un même remplissage, c'est-à-dire introduire une même quantité de gaz dans la chambre que lors de l'admission précédemment décrite (courbe $C_o$). Lorsque l'admission de gaz est arrêtée, le piston est en cours de course d'admission. Les gaz admis sont donc détendus jusqu'à une pression $P_2$ pendant la fin de course d'admission du piston qui, lors de sa course de compression, comprime les gaz jusqu'à une pression $P_e'$, inférieure à $P_e$, où s'effectue leur combustion. Une telle détente utilise le cycle dénommé cycle Miller.

La présente invention concerne un procédé permettant de commander le taux de compression d'un moteur à combustion interne équipé d'un turbocompresseur et de soupapes commandées par signaux électriques. Il est caractérisé en ce qu'on détermine en temps réel un taux de compression optimal pour le fonctionnement du moteur, et on commande les soupapes pour que l'admission des gaz dans les chambres de combustion du moteur corresponde à ce taux de compression optimal, le couple et le régime du moteur étant maintenus indépendants des variations du taux de compression grâce à une régulation de la pression des gaz admis et/ou du remplissage.

Ce procédé permet d'adapter le taux de compression d'un moteur à son fonctionnement, par exemple en établissant un taux de compression élevé lorsque la charge du moteur est faible ou un taux de compression faible lorsque la charge est élevée. Les avantages d'un taux de compression élevé (bon rendement de la combustion) et d'un taux de compression faible (émission de particules réduites, risque limité de cliquetis) sont alors accessibles à un moteur utilisant le procédé conforme à l'invention.

De plus, on peut effectuer une détente des gaz à l'admission (cycle Miller) pour que le cliquetis soit éliminé.

Dans une réalisation, on détermine le taux de compression optimal en fonction d'au moins un des paramètres suivants: le régime, le couple et le cliquetis du moteur.

Selon un mode de réalisation, on détermine une pression d'admission des gaz adaptée au taux de compression optimal, au régime et au couple moteur pour commander le turbocompresseur.

Dans ce cas, dans une réalisation, on utilise une base de données déterminant une première pression d'admission adaptée au régime et au couple du moteur dans le cas où un taux de compression maximal serait utilisé, et on détermine la pression adaptée au taux optimal en corrigeant la première pression déterminée par un facteur correcteur déterminé par cartographie.

Dans une réalisation, on détermine le remplissage du moteur en fonction du taux de compression optimal, du régime moteur, de son couple et/ou de la présence de cliquetis.

Selon un mode de réalisation, on détermine les temps d'ouverture des soupapes en fonction de la pression d'admission des gaz, du remplissage du moteur et du taux de compression optimal.

Dans une réalisation, lorsque du cliquetis est détecté, on diminue le taux de compression.

L'invention concerne aussi un dispositif de commande d'un moteur à combustion interne équipé de soupapes à commande électromagnétique et d'un turbocompresseur, caractérisé en ce qu'il comprend des moyens pour déterminer un taux de compression optimal pour le fonctionnement du moteur, des moyens pour commander les soupapes de façon à ce que l'admission des gaz dans les chambres de combustion du moteur corresponde au taux de compression optimal, et une régulation de la pression et/ou du remplissage pour maintenir le couple et le régime du moteur indépendants des variations du taux de compression.

Dans une réalisation du dispositif, le taux de compression optimal est fonction d'au moins un des paramètres suivants: le régime, le couple et le cliquetis du moteur.

Selon un mode de réalisation, on détermine une pression d'admission des gaz adaptée au taux de compression optimal, au régime et au couple moteur pour commander le turbocompresseur.

D'autres caractéristiques et avantages de l'invention apparaîtront avec la description de certains de ses modes de réalisation, celle-ci étant effectuée en se référant aux dessins ci-annexés sur lesquels :

La figure 1, déjà décrite, est un diagramme de la pression des gaz admis dans des cylindres turbocompressés, et
la figure 2 est un schéma d'un procédé et d'un dispositif de commande du taux de compression d'un moteur conforme à l'invention.

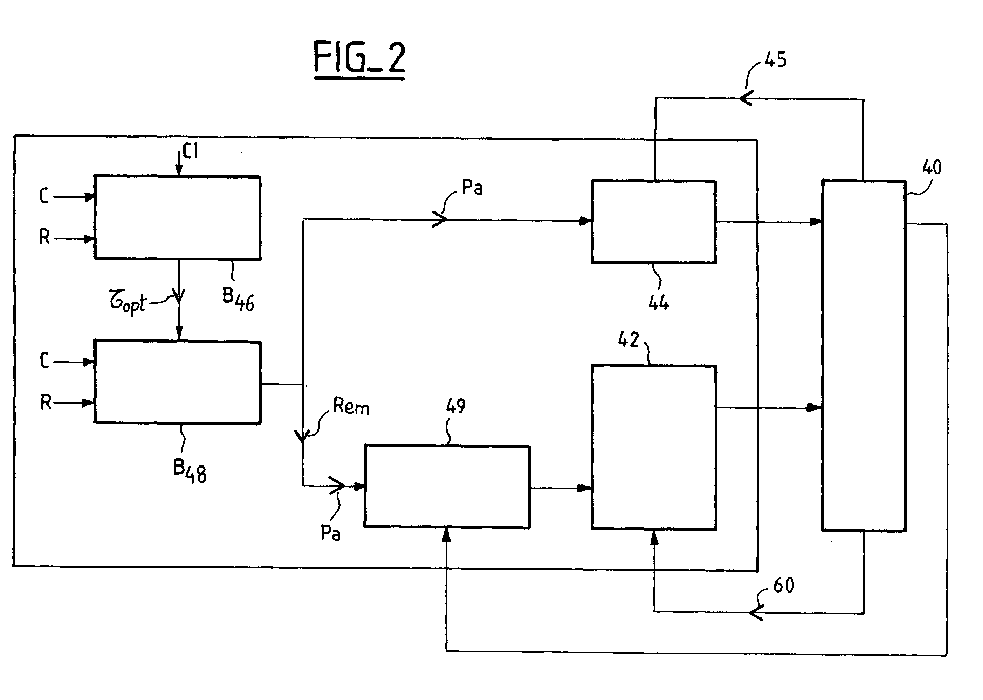

Le procédé de commande du taux de compression d'un moteur décrit à l'aide de la figure 2 s'applique à un cylindre 40 dont les soupapes d'admission sont commandées par un actionneur électromécanique 42 (non montré en détail) qui comprend, par exemple, deux électroaimants agissant sur un plateau magnétique solidaire d'une tige agissant elle-même sur une autre tige solidaire de la soupape. Quand le premier électroaimant est activé, la tige solidaire de la soupape est séparée de la tige solidaire du plateau et la soupape ferme le cylindre sous l'action d'un premier ressort agissant sur la tige de soupape. Quand le second électroaimant est activé (le premier étant au repos), la tige solidaire du plateau magnétique pousse la tige de soupape de façon à la positionner en ouverture. Les signaux d'activation des électroaimants permettent de changer à volonté les moments d'ouverture et de fermeture, ces moments étant calculés comme décrit ultérieurement.

Conformément à l'invention, le taux de compression du cylindre 40 est adapté au fonctionnement du moteur en modifiant la durée d'ouverture des soupapes d'admission, et donc le remplissage en gaz admis dans les chambres de combustion. Par ailleurs, lorsque du cliquetis est détecté, on commande les soupapes d'admission et le turbocompresseur 44 du moteur de façon à éliminer ce cliquetis en détendant les gaz à l'admission (cycle Miller).

La mise en oeuvre du procédé fait appel à une base de données $B_{46}$ déterminant le taux $\tau_{opt}$ de compression optimal du cylindre 40 en fonction de son couple C, de son régime R et de la présence de cliquetis Cl. Les données de cette base $B_{46}$ sont obtenues préalablement, par exemple par modélisation ou à l'aide d'un banc d'essais, en fonction de paramètres d'évaluation tels que le rendement de la combustion, l'émission de polluants et/ou de l'absence de cliquetis.

D'une façon générale, on considérera par la suite que, plus le couple moteur est élevé, plus le taux de compression optimal est faible et, plus le régime est élevé, plus le taux de compression optimal est élevé. Par ailleurs, lorsque du cliquetis est détecté, le taux de compression doit diminuer jusqu'à l'élimination de ce cliquetis ou augmenter pour permettre la dilatation des gaz admis suivant le cycle Miller déjà décrit.

Toutefois, une variation de la durée d'ouverture de la soupape d'admission modifie la quantité de gaz introduite dans le cylindre si la pression d'admission n'est pas adaptée pour compenser cette modification. Par exemple, si la durée d'admission de gaz croît pour augmenter le taux de compression du moteur, la pression d'admission du gaz doit diminuer pour qu'une même quantité de carburant soit introduite dans la chambre de combustion indépendamment de la variation du taux de compression. En l'absence d'une telle compensation, une modification de la durée d'ouverture des soupapes entraînerait une variation inacceptable du couple délivré par le moteur à l'insu du conducteur du véhicule.

Pour éviter une telle modification du couple, la détermination du taux de compression optimal entraîne l'adaptation de la pression d'admission des gaz dans les chambres pour compenser la variation du délai d'admission des gaz et assurer un couple C et un régime R requis.

A cet effet, on utilise une seconde base de données $B_{48}$ qui détermine la pression d'admission $P_a$ et le remplissage $R_{em}$ adaptés à un taux $\tau_{opt}$ de compression donné, au couple C et au régime R devant être maintenus.

Dans un premier temps, une pression $P'_a$ d'admission est déterminée en considérant la pression optimale d'admission si le cylindre 40 avait un taux de compression $\tau_{géo}$ maximal. Ensuite, on modifie cette pression $P'_a$ par un facteur $f(\tau_{opt})$ correcteur prenant en compte la différence entre le taux de compression $\tau_{géo}$ géométrique et le taux de compression $\tau_{opt}$ désiré, par exemple sous la forme $P_a = P'_a * f(\tau_{opt})$.

La détermination de $P'_a$ et de $f(\tau_{opt})$ est effectuée par une cartographie considérant le régime et le couple comme des variables d'entrée - cette cartographie étant établie lors d'essais du moteur considéré.

Dans un deuxième temps, le remplissage est déterminé en ne prenant en compte que le remplissage $R'_{em}$ nécessaire à l'obtention du couple C. Ce remplissage $R'_{em}$ est obtenu par modélisation du fonctionnement du moteur, par exemple sur un banc d'essais, en considérant que le couple C correspond à un remplissage $R'_{em}$ tel que:

$$C = a_o + a_1 . R'_{em} + a_2 . (R'_{em})^2$$

où $a_o$, $a_1$ et $a_2$ sont des constantes. Ce remplissage $R'_{em}$ est ensuite modifié par un facteur $f'(\tau_{opt})$ correcteur tel que : $R_{em} = R'_{em} * f'(\tau_{opt})$

De façon similaire à $f(\tau_{opt})$, la détermination de $f'(\tau_{opt})$ est effectuée par une cartographie considérant le régime et le couple du moteur comme des variables d'entrée, la cartographie étant établie lors d'essais propres au moteur considéré.

La consigne de pression $P_a$ est transmise à un module de contrôle du turbocompresseur 44 pour commander la pression $P_a$ d'admission des gaz dans le cylindre 40. L'établissement de cette pression s'effectue par rétroaction 45 de la mesure de pression de suralimentation. De fait, la commande du turbocompresseur est fonction de la différence entre la consigne $P_a$ de pression et la pression d'alimentation mesurée.

Par ailleurs, l'actionneur 42 de commande des soupapes requiert une mesure de pression d'admission pour son fonctionnement. Or la mesure de pression réellement effectuée possède une dynamique trop lente pour satisfaire la précision requise. C'est pourquoi, un module 49 est utilisé pour estimer la pression de suralimentation à partir de mesures du débit et de la température de l'air à l'admission. Une correction de cette estimation de pression est effectuée en fonction de la pression de consigne provenant du module $B_{48}$ et de la mesure de suralimentation.

Il convient de souligner que grâce au dispositif de commande de soupapes le contrôle du remplissage s'effectue en temps réel, ce qui permet de compenser les problèmes de retard d'évaluation de la pression d'admission des gaz.

A partir des commandes de pression $P_a$ des gaz à l'admission et du taux $\tau_{opt}$ de compression à obtenir, le dispositif 42 détermine les commandes d'ouverture et de fermeture des soupapes d'admission pour admettre le volume requis de gaz dans les chambres de combustion du cylindre 40, à la pression déterminée, de façon à obtenir le taux de compression $\tau_{opt}$ optimal.

Pour améliorer le contrôle des délais d'ouvertures des soupapes d'admission, des mesures 60 de la position des soupapes d'admission sont transmises à l'actionneur 42.

L'invention est susceptible de nombreuses variantes, par exemple en considérant un moteur comprenant plusieurs cylindres pouvant être activés ou désactivés. Dans ce cas, la commande des soupapes tient aussi compte, pour obtenir le taux de compression donné, de ces activations et/ou désactivations.

## Revendications

1. Procédé de commande d'un moteur à combustion interne équipé de soupapes commandées par signaux électriques et d'un turbocompresseur (44), **caractérisé en ce qu'**on détermine en temps réel un taux de compression optimal ($\tau_{opt}$) pour le fonctionnement du moteur, et on commande les soupapes pour que l'admission des gaz dans les chambres de combustion du moteur corresponde à ce taux de compression optimal, le couple (C) et le régime (R) du moteur étant maintenus indépendants des variations du taux de compression grâce à une régulation de la pression ($P_a$) des gaz admis et/ou du remplissage ($R_{em}$).

2. Procédé selon la revendication 1, **caractérisé en ce qu'**on détermine le taux de compression optimal ($\tau_{opt}$) en fonction d'au moins un des paramètres suivants: le régime (R), le couple (C) et le cliquetis (Cl) du moteur.

3. Procédé selon l'une des revendications 1 ou 2, **caractérisé en ce qu'**on détermine une pression ($P_a$) d'admission des gaz adaptée au taux de compression optimal ($\tau_{opt}$), au régime (R) et au couple (C) moteur pour commander le turbocompresseur (44).

4. Procédé selon la revendication 3, **caractérisé en ce qu'**on utilise une base de données (B48) déterminant une première pression d'admission adaptée au régime (R) et au couple (C) du moteur dans le cas où un taux de compression maximal serait utilisé, et on détermine la pression adaptée au taux optimal ($\tau_{opt}$) en corrigeant la première pression déterminée par un facteur correcteur déterminé par cartographie.

5. Procédé selon l'une des revendications précédentes, **caractérisé en ce qu'**on détermine le remplissage du moteur en fonction du taux de compression optimal, du régime moteur, de son couple et/ou de la présence de cliquetis.

6. Procédé selon l'une des revendications précédentes, **caractérisé en ce qu'**on détermine les temps d'ouverture des soupapes en fonction de la pression d'admission des gaz, du remplissage du moteur et du taux de compression optimal.

7. Procédé selon l'une des revendications précédentes, **caractérisé en ce que**, lorsque du cliquetis est détecté, on diminue le taux de compression.

8. Dispositif de commande d'un moteur à combustion interne équipé de soupapes à commande électromagnétique et d'un turbocompresseur, **caractérisé en ce qu'**il comprend des moyens pour déterminer un taux de compression optimal pour le fonctionnement du moteur, des moyens pour commander les soupapes de façon à ce que l'admission des gaz dans les chambres de combustion du moteur corresponde au taux de compression optimal, et une régulation de la pression et/ou du remplissage pour maintenir le couple et le régime du moteur indépendants des variations du taux de compression.

9. Dispositif selon la revendication 8, **caractérisé en ce que** le taux de compression optimal est fonction d'au moins un des paramètres suivants: le régime, le couple et le cliquetis du moteur.

10. Dispositif selon l'une des revendications 8 ou 9, **caractérisé en ce qu'**on détermine une pression d'admission des gaz adaptée au taux de compression optimal, au régime et au couple moteur pour commander le turbocompresseur.

**Patentansprüche**

1. Verfahren zur Regelung eines Motors mit interner Verbrennung, welcher mit durch elektrische Signale gesteuerten Ventilen und einem Turbokompressor (44) ausgerüstet ist, **dadurch gekennzeichnet, dass** ein für die Funktion des Motors optimaler Kompressionsgrad ($\tau_{opt}$) in Echtzeit bestimmt wird, und die Ventile so gesteuert werden, dass das Laden von Gasen in die Verbrennungskammern des Motors diesem optimalen Kompressionsgrad entspricht, wobei das Moment (C) und die Drehzahl (R) des Motors dank einer Regelung des Drucks ($P_a$) der geladenen Gase und/oder der Füllung ($R_{em}$) unabhängig von Variationen des Kompressionsgrads gehalten werden.

2. Verfahren nach Anspruch 1, **dadurch gekennzeichnet, dass** der optimale Kompressionsgrad ($\tau_{opt}$) als Funktion wenigstens eines der folgenden Parameter bestimmt wird: die Drehzahl (R), das Moment (C) und das Klingeln (Cl) des Motors.

3. Verfahren nach einem der Ansprüche 1 oder 2, **dadurch gekennzeichnet, dass** ein dem optimalen Kompressionsgrad ($\tau_{opt}$), der Drehzahl (R) und dem Moment (C) des Motors angepasster Gasladedruck ($P_a$) zum Steuern des Turbokompressors (44) bestimmt wird.

4. Verfahren nach Anspruch 3, **dadurch gekennzeichnet, dass** eine Datenbank (B48) verwendet wird, welche einen der Drehzahl (R) und dem Moment (C) des Motors für den Fall, dass ein maximaler Kompressionsgrad verwendet werden soll, angepassten ersten Ladedruck bestimmt, und der dem optimalen Grad ($\tau_{opt}$) angepasste Druck bestimmt wird, indem der bestimmte erste Druck durch einen kartografisch bestimmten Korrekturfaktor korrigiert wird.

5. Verfahren nach einem der vorhergehenden Ansprüche, **dadurch gekennzeichnet, dass** der Füllgrad des Motors als Funktion des optimalen Kompressionsgrads, der Motordrehzahl, seines Moments und/oder des Vorliegens von Klingeln bestimmt wird.

6. Verfahren nach einem der vorhergehenden Ansprüche, **dadurch gekennzeichnet, dass** die Öffnungszeit der Ventile als Funktion des Gasladedrucks, der Füllung des Motors und des optimalen Kompressionsgrads bestimmt wird.

7. Verfahren nach einem der vorhergehenden Ansprüche, **dadurch gekennzeichnet, dass**, wenn Klingeln erfasst ist, der Kompressionsgrad verringert wird.

8. Vorrichtung zur Regelung eines Motors mit interner Verbrennung, welcher mit elektromagnetisch gesteuerten Ventilen und einem Turbokompressor ausgestattet ist, **dadurch gekennzeichnet, dass** sie Mittel zum Bestimmen eines für die Funktion des Motors optimalen Kompressionsgrads, Mittel zum Steuern der Ventile, derart, dass das Laden von Gasen in die Verbrennungskammern des Motors dem optimalen Kompressionsgrad entspricht, und eine Regelung des Drucks und/oder der Füllung um das Moment und die Drehzahl des Motors unabhängig von Variationen des Kompressionsgrads zu halten, umfasst

**9.** Vorrichtung nach Anspruch 8, **dadurch gekennzeichnet, dass** der optimale Kompressionsgrad eine Funktion wenigstens eines der folgenden Parameter ist: die Drehzahl, das Moment und das Klingeln des Motors.

**10.** Vorrichtung nach einem der Ansprüche 8 oder 9, **dadurch gekennzeichnet, dass** ein dem optimalen Kompressionsgrad, der Drehzahl und dem Motormoment angepasster Gasladedruck zum Regeln des Turbokompressors bestimmt wird.

## Claims

**1.** A method of controlling an internal combustion engine equipped with valves controlled by electric signals and a turbocompressor (44), **characterised in that** an optimal compression ratio ($\tau_{opt}$) for engine operation is determined in real time, and the valves are so controlled that the admission of the gases into the engine combustion chambers corresponds to said optimal compression ratio, the torque (C) and operating conditions (R) of the engine being kept independent of the variations in the compression ratio by regulation of the pressure ($P_a$) of the gases admitted and/or the filling ($R_{em}$).

**2.** A method according to claim 1, **characterised in that** the optimal compression ratio ($\tau_{opt}$) is determined as a function of at least one of the following parameters: the operating conditions (R), the torque (C) and pinking (C1) of the engine.

**3.** A method according to claim 1 or 2, **characterised in that** a gas admission pressure ($P_a$) is determined which is adapted to the optimal compression ratio ($\tau_{opt}$), the engine operating conditions (R) and engine torque (C) to control the turbocompressor (44).

**4.** A method according to claim 3, **characterised in that** a database (B48) is used which determines a first admission pressure adapted to the engine operating conditions (R) and torque (C) in the case in which a maximum compression ratio would be used, and the pressure adapted to the optimal ratio ($\tau_{opt}$) is determined by correcting the first pressure determined by a correcting factor determined by cartography.

**5.** A method according to any one of the preceding claims, **characterised in that** the filling of the engine is determined as a function of the optimal compression ratio, the engine operating conditions, its torque and/or the presence of pinking.

**6.** A method according to any one of the preceding claims, **characterised in that** the opening times of the valves are determined as a function of the admission pressure of the gases, the engine filling and the optimal compression ratio.

**7.** A method according to any one of the preceding claims, **characterised in that** when pinking is detected the compression ratio is reduced.

**8.** A system for controlling an internal combustion engine equipped with electromagnetically controlled valves and a turbocompressor, **characterised in that** it comprises means for determining an optimal compression ratio for the engine operation, means for controlling the valves so that the admission of the gases to the combustion chambers of the engine corresponds to the optimal compression ratio, and a regulation of the pressure and/or filling in order to maintain the torque and engine operating conditions independent of the variations in the compression ratio.

**9.** A system according to claim 8, **characterised in that** the optimal compression ratio is a function of at least one of the following parameters: the engine operating conditions, the torque and pinking.

**10.** A system according to claim 8 or 9, **characterised in that** an admission pressure of the gases is determined which is adapted to the optimal compression ratio, the engine operating conditions and torque to control the turbocompressor.

# FIG_1

FIG_2

EP 1 300 569 B1